# FASCICULE DE BREVET EUROPEEN

(11) **EP 1 805 443 B1**
(45) Date de publication et mention de la délivrance du brevet: **06.03.2013**
(21) Numéro de dépôt: 05809087.9
(22) Date de dépôt: 12.10.2005
(51) Int. Cl.: F16L 11/08

(54) **CONDUITE FLEXIBLE STABILISEE POUR LE TRANSPORT DES HYDROCARBURES**
STABILISIERTE FLEXIBLE LEITUNG ZUM TRANSPORT VON KOHLENWASSERSTOFFEN
STABILIZED FLEXIBLE LINE FOR TRANSPORTING HYDROCARBONS

(30) Priorité: 21.10.2004 FR 0411210
(43) Date de publication de la demande: 11.07.2007
(73) Titulaire: Technip France, 92400 Courbevoie (FR)
(72) Inventeur: COUTAREL, Alain, 76130 Mont Saint Aignan (FR); BECTARTE, Fabrice, F-76000 Rouen (FR)
(74) Mandataire: Bertrand, Didier
(86) Numéro de dépôt international: PCT/FR2005/002526
(87) Numéro de publication internationale: WO 2006/042939

(56) Documents cités:
- WO-A-03/083343
- GB-A- 1 239 884
- US-A- 5 213 637
- US-A1- 2003 102 044

## Description

La présente invention se rapporte à une conduite flexible stabilisée pour le transport des hydrocarbures. Plus particulièrement, l'invention concerne les fils d'armure de la conduite flexible qui permettent notamment de limiter le flambage latéral des nappes d'armures de traction de la conduite flexible.

Les conduites flexibles telles que définies dans la recommandation API 17 J de l'American Petroleum Institute comprennent généralement une ou plusieurs couches polymériques et des couches de renfort métalliques telles que des nappes d'armures de traction, une carcasse et/ou une voûte de pression. La nature, le nombre, le dimensionnement et l'organisation de ces couches sont essentiellement liés aux conditions d'utilisation des conduites flexibles concernées ainsi qu'à leur mise en place, comme cela est défini dans la recommandation API 17. J.

Lorsque la conduite flexible, quelle que soit sa nature, est soumise à une pression externe Pe qui est plus élevée que la pression interne, il se produit une compression axiale qui est connue comme étant l'effet de fond inverse. L'effet de fond inverse a tendance à induire un effort longitudinal de compression dans les armures et à raccourcir la longueur de la conduite flexible. De plus, la conduite flexible est également soumise à des sollicitations dynamiques notamment lors de l'installation ou en service dans le cas des conduites montantes (riser en anglais). L'ensemble de ces contraintes peut provoquer un endommagement d'un ou de plusieurs fils d'armure et provoquer ainsi à terme la ruine de la conduite flexible. Une nappe d'armure est considérée endommagée lorsque certains fils sont rompus et/ou présentent une importante déformation permanente (plastification) et/ou sont chevauchés.

Une première cause d'endommagement des armures est un état de contraintes excessives résultant d'efforts et/ou de déformations imposés trop grands et conduisant à la rupture et/ou à la plastification des fils. Ce mode de ruine peut se produire en cas d'effet de fond inverse mais aussi dans d'autres situations.

Une deuxième cause d'endommagement est le flambement, c'est-à-dire un phénomène d'instabilité pouvant conduire à de forts déplacements (et déformations) des armures. Ce mode de ruine ne peut exister que s'il y un effort longitudinal de compression dans les fils d'armures, c'est-à-dire en particulier en situation d'effet de fond inverse. L'instabilité se produit dès que la compression axiale dépasse un niveau dit charge critique. Celle-ci dépend de la nature du fil d'armure (module du matériau, largeur, épaisseur) et de l'état d'ensemble des armures (déformation imposée telle que déviations transverses, frottement sur les autres couches, résistance des autres couches, etc.). De manière générale, au moment où la charge critique est atteinte, l'armure serait en fait considérée saine au vu d'autres critères tel que par exemple des contraintes inférieures à la limite élastique du matériau.

L'instabilité de flambement est certes une cause potentielle d'endommagement mais dans certains cas il peut y avoir flambement sans endommagement des armures. Ceci se produit lorsque (bien que le fil soit intrinsèquement instable) l'amplitude de ses déformations est suffisamment limitée par ailleurs pour que ne soit pas atteint un état de ruine, par exemple, par dépassement de limite élastique. Une telle limitation des déformations peut être envisagée, par exemple, par appui sur les fils voisins (instabilité latérale limitée grâce à des jeux latéraux très faibles) ou bien par appui sur une autre couche (comme dans le cas d'instabilité radiale). Dans le cas contraire, les déplacements n'étant pas suffisamment limités, le flambement latéral conduira au chevauchement et/ou à la plastification des fils d'armure mais ceci n'est en fait qu'une conséquence de l'instabilité de flambement.

Une troisième cause d'endommagement est la désorganisation des armures par chevauchement de fils. Suivant les types de conduite flexible et les contraintes dynamiques subies, il y a des situations où les jeux latéraux entre fils sont résorbés au moins sur une partie de la longueur d'un pas d'armage. Il existe alors un seuil pour l'amplitude des forces de contact latéral au-delà duquel un chevauchement de fil peut se produire. Ce seuil dépend de plusieurs facteurs dont la géométrie des fils (épaisseur du fil, concavité des champs), l'importance des frottements, la plus ou moins grande liberté de mouvement radial.

En résumé, en effet de fond inverse et lorsque la conduite subit des sollicitations dynamiques telle que du cintrage, les nappes d'armures de la conduite peuvent être endommagés selon les modes d'endommagement suivants : contraintes excessives (dépassement de limite élastique), instabilité de flambement et/ou désorganisation par chevauchement. Une fois l'endommagement initié suivant l'un de ces modes pour au moins un fil, l'équilibre de la structure peut être perturbé au point que les autres fils périssent par effet de cascade suivant le même mode d'endommagement ou bien suivant d'autres modes.

Lors du cintrage d'une conduite flexible, les fils des nappes d'armures se déplacent vis-à-vis du noyau sous-jacent. L'amplitude de ces déplacements longitudinaux et transversaux dépend de nombreux paramètres tels que rayon de cintrage, caractéristiques des nappes d'armures (angle d'armage, jeux entre fils, nature des fils), état de la gaine externe (étanche ou non), efforts appliqués (traction, compression, pression interne, pression externe, frottements au sein de la structure). Les déplacements de fils conduisent généralement à des jeux entre fils d'une même nappe qui présentent une amplitude variable le long d'un pas d'armage. De plus, les déplacements d'armures s'accompagnent de déformations des fils dont l'amplitude dépend de l'importance des forces de frottement.

Dans certaines conditions, par exemple en gaine externe non étanche et que la conduite soit droite ou cintrée, les fils d'armures peuvent flamber selon un mode radial et prendre la forme d'une "cage d'oiseau".

Un autre mode d'endommagement des armures de traction dû à la sollicitation en compression qu'elles subissent avec l'effet de fond inverse est le flambage dit latéral ("lateral buckling" en anglais) qui peut survenir lors du cintrage de la conduite flexible et ce, quel que soit l'état de la gaine externe. On appellera flambage latéral l'ensemble des modes d'endommagements latéraux des fils d'armures décrits précédemment : contraintes excessives (dépassement de limite élastique), instabilité de flambement latéral et/ou désorganisation par chevauchement.

Lorsque la gaine externe est étanche, les effets de la pression externe sont susceptibles d'engendrer d'importantes forces de frottement entre les diverses nappes de la structure. Ces forces de frottement combinées aux sollicitations dynamiques sont susceptibles d'entraîner une migration des fils c'est-à-dire un accroissement localisé des déplacements, des déformations transverses et des jeux latéraux entre les fils d'une même nappe d'armure. Ces phénomènes sont ainsi susceptibles de conduire à un flambage latéral des fils d'armure notamment par une plastification progressive de leurs bords.

Lorsque la gaine externe polymérique de la conduite flexible est non étanche que cela soit volontaire ou bien qu'elle ait été endommagée pour une raison quelconque, la pression régnant dans l'annulaire où sont disposées les armures de traction, est égale à la pression hydrostatique. La migration des fils d'armure, sous l'effet des contraintes dynamiques et d'un frottement moins important peut provoquer un flambage latéral ou également un phénomène de flambement radial.

Une des solutions adoptée et décrite dans le brevet WO 03/083343 pour réduire les risques de flambement radial en "cage d'oiseau" et/ou de flambage latéral ainsi que pour réduire le gonflement des armures lié à l'effet de fond inverse notamment lorsque la gaine externe est non étanche, est d'enrouler des rubans ou couches renforcées par exemple de fibres aramides tels que du "KEVLAR" autour de la dernière nappe d'armures et des nappes sous jacentes. De cette manière, on contrôle d'une part le gonflement de chacune des nappes d'armures tout en réduisant d'autre part le risque d'endommagement par chevauchement des nappes d'armures. Toutefois, si cette solution permet de résoudre les problèmes liés au flambement radial, elle permet seulement de limiter le risque de flambage latéral qui perdure.

Dans l'art antérieur, une des solutions utilisées contre l'endommagement latéral est l'utilisation d'armures plus épaisses. Cette solution augmente la résistance à l'instabilité de flambement des fils tout en ne les pénalisant pas pour l'endommagement latéral par contrainte excessive du à leur migration. On peut également réduire les risques en augmentant l'angle d'armage. Une autre solution envisagée consiste à augmenter le nombre de nappes d'armure. Toutefois l'ensemble de ces solutions sont généralement pénalisantes car lourdes, chères et peu efficaces.

Lorsqu'un fil d'armure se déplace latéralement par suite d'un flambage latéral, il peut dans certaines conditions entraîner les autres fils d'armures de la nappe. Le résultat est que la conduite flexible est sinon détruite du moins rendue inutilisable et il faut procéder à son changement car une réparation de la conduite flexible n'est pas envisageable économiquement parlant.

Le document US 2003/102044 divulgue une conduite flexible présentant une nappe d'armures de traction, dont le rapport de la largeur sur la hauteur des fils d'armure obtenus à partir de fevillards d'acier est compris entre 3 et 20.

Un problème qui se pose et que vise à résoudre la présente invention est alors de fournir une conduite flexible dont les armures ne sont pas endommagées sous l'effet de fond inverse notamment, et également qui puisse être réalisée à un coût avantageux en particulier pour les conduites à fort diamètre.

Dans ce but, la présente invention propose une conduite flexible pour le transport des hydrocarbures comprenant de l'intérieur vers l'extérieur, un ensemble structurel cylindrique adapté à résister aux efforts radiaux et au moins une première nappe d'armures, ladite première nappe d'armures comportant une pluralité de fils d'armure, lesdits fils d'armure étant constitués de fils métalliques formés et aplatis, lesdits fils d'armure qui présentent une largeur l supérieure à une épaisseur e, étant enroulés parallèlement et en hélice à pas long autour dudit ensemble structurel, lesdits fils formant un angle inférieur à 60° avec les génératrices dudit ensemble structurel ; selon l'invention lesdits fils d'armure présentent un rapport, largeur sur épaisseur l/e, supérieur ou égal à quatre.

Ainsi, une caractéristique de l'invention réside dans l'utilisation de fils d'armure larges dont la largeur est supérieure ou égale à quatre fois l'épaisseur, pour réaliser les armures des conduites flexibles, ces fils d'armures larges sont obtenus par tréfilage et laminage et traitements thermiques de fils de forme ronds. De la sorte, on prévient le flambage latéral et, on diminue le nombre de fils à enrouler simultanément en hélice pour former la conduite, puisqu'ils couvrent une surface plus importante. Par exemple, grâce aux fils d'armure larges conformes à l'invention sur une grande partie des conduites flexibles fabriquées, les nappes d'armures comportent moins de 40 fils, lesquels sont enroulés simultanément afin de réaliser la conduite, alors que généralement une quantité bien plus importante est nécessaire, ce qui induit le montage d'un grand nombre de bobines de fils sur les machines ou armeuses.

En revanche, il existe des préjugés importants à l'encontre de l'utilisation des fils d'armures larges. Compte tenu des frottements entre les nappes d'armures, le déplacement des fils n'est pas totalement libre de sorte que les fils peuvent être soumis à des courbures transverses imposées. Il en résulte alors, pour des fils d'armure larges des contraintes sur les bords plus élevées qu'avec des fils étroits et ces contraintes peuvent sous certaines conditions, induire la plastification des bords des fils, ce qui compromet alors la tenue au flambage latéral des armures. De plus, l'utilisation de fils larges présente également d'autres inconvénients et notamment des problèmes de fabrication du fil large ainsi que des problèmes concernant sa mise en oeuvre sur la conduite flexible (préformation des fils lors de l'armage).

Toutefois, contre toute attente, il s'avère que l'on bénéficie davantage de l'augmentation d'inertie des fils larges que l'on ne pâtit de l'augmentation des contraintes sur les bords pour lutter contre les phénomènes de flambage latéral. Ainsi, malgré ces préjugés, les fils d'armure larges selon l'invention, dont la largeur est supérieure ou égale à quatre fois l'épaisseur, permettent non seulement de réaliser des conduites flexibles à un coût avantageux mais aussi de réaliser des conduites flexibles dont les fils d'armure résistent au flambage latéral. De cette façon, l'invention permet de proposer une conduite flexible ayant une résistance accrue à la combinaison de la pression externe et des sollicitations dynamique, mais elle permet également pour des conditions données de profondeur et de sollicitations de proposer un design de conduite flexible optimisé.

Selon une autre caractéristique, les fils d'armure ont une contrainte à la rupture en traction (ultimate tensile strength en anglais) supérieure à 900 MPa. Ce mode de réalisation est particulièrement avantageux pour les flexibles destinés aux grandes profondeurs qui doivent de ce fait pouvoir résister à de fortes compressions axiales lorsqu'ils sont installés sur le fond marin, mais aussi endurer de fortes sollicitations dynamiques en traction et en flexion, notamment lors de l'installation ou en service dans le cas des conduites montantes. Le choix de fils présentant une contrainte à la rupture élevée permet d'améliorer la résistance des nappes d'armures au flambage latéral et aux sollicitations dynamiques, notamment du fait que ces fils ont aussi a fortiori une contrainte à la limite élastique (yield strength en anglais) élevée, si bien que les contraintes statiques et dynamiques appliquées en service auxdits fils restent nettement inférieures à ladite contrainte à la limite élastique, ce qui permet en particulier d'éviter la plastification des bords des fils et d'assurer une bonne résistance à la fatigue dans le cas de sollicitations dynamiques. L'augmentation des caractéristiques mécaniques permet aussi, à chargement égal, de réduire la section des fils, et par conséquent le poids de la conduite flexible, ce qui a généralement une grande importance pour les applications en mer profonde, du fait des limites de capacité des moyens d'installation ou de production. Un préjugé à l'encontre de l'utilisation de fils larges à hautes caractéristiques mécaniques est lié à la difficulté accrue de préformer et d'enrouler à froid des fils à la fois plus résistant et présentant une plus grande section. Toutefois, malgré ces préjugés, il est possible de mettre en oeuvre ces fils pour fabriquer une conduite flexible.

Selon une autre caractéristique de l'invention, la rugosité moyenne Ra des faces situées sur les bords desdits fils, mesurée selon la norme ISO 4287, est inférieure à 1,6. De la sorte, les bords des fils présentent un bon état de surface, ce qui a pour effet d'améliorer la tenue en fatigue des nappes d'armures. En effet, les bords des fils sont des zones particulièrement sollicitées en fatigue, du fait des courbures transverses imposées aux fils lorsque la conduite flexible subit des variations de courbure. De plus, un bon état de surface contribue à la réduction du risque d'initiation de fissures de fatigue.

Selon une autre caractéristique avantageuse, les fils d'armure, vus en section droite, présentent sur leurs deux bords des faces d'appui sensiblement planes et perpendiculaires à leurs grandes faces. Dans un mode de réalisation avantageux, la hauteur des faces d'appui est supérieure à 30% de l'épaisseur des fils.

Selon une autre caractéristique de l'invention, les fils d'armure, vus en section droite, ont dans leurs quatre coins des congés de raccordement de forme sensiblement arrondie et de rayon moyen supérieur à 0,5mm. Tout d'abord, la présence de ces congés permet d'éviter les concentrations de contrainte au niveau des coins, les coins étant des zones particulièrement sollicitées en fatigue, ce qui améliore la tenue en fatigue des nappes d'armures. Ensuite, ces congés permettent d'éviter les bavures et arrêtes tranchantes qui pourraient endommager les couches adjacentes, particulièrement s'il s'agit de couches en matériau polymère.

Selon un mode de mise en oeuvre de l'invention, la conduite flexible comprend une seconde nappe d'armure, les fils d'armure de ladite seconde nappe d'armure étant enroulés en hélice inverse à pas long autour de ladite première nappe d'armure, et le rapport de la largeur sur l'épaisseur des fils d'armure de ladite seconde nappe est inférieur audit rapport largeur sur épaisseur des fils de ladite première nappe. De la sorte, la résistance aux contraintes qui s'exercent sur la conduite flexible est compensée de manière totalement symétrique par l'enroulement croisé des fils d'armure des deux nappes, et cela permet d'utiliser des fils plus étroits sur l'une des nappes occasionnant une réduction de coût potentielle.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- La Figure 1 est une vue schématique partielle en perspective d'une conduite flexible conforme à l'invention ; et,
- La Figure 2 est une vue schématique partielle en perspective de détail d'un élément représenté sur la Figure 1.
- La Figure 3 est une vue schématique en section droite de détail d'un élément représenté sur la Figure 1.

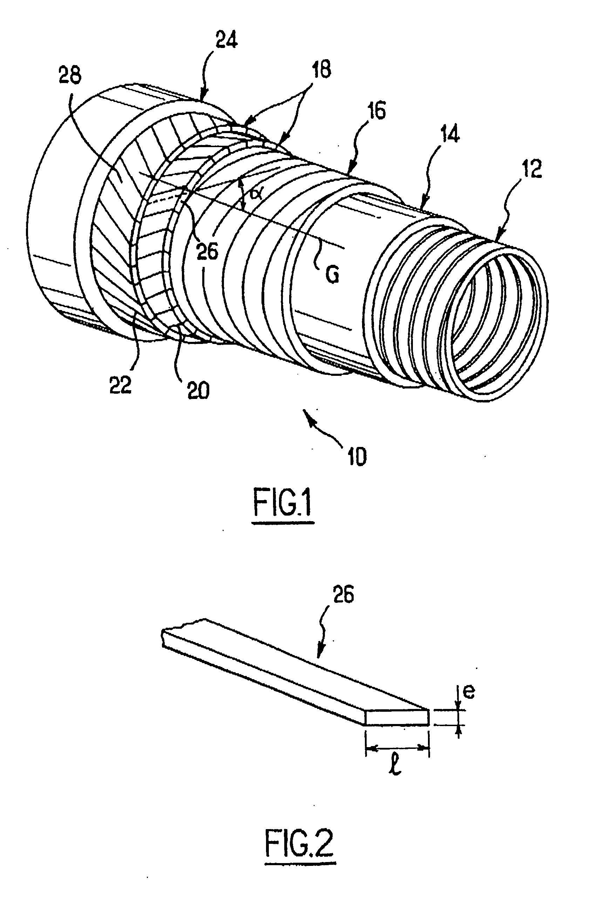

La Figure 1 illustre une conduite 10 comprenant de l'intérieur vers l'extérieur une carcasse 12 en feuillard formé et agrafé, une gaine d'étanchéité interne polymérique 14, une voûte métallique 16 constituée par l'enroulement en hélice a pas à court d'au moins un fil métallique de forme, ici en zeta auto-agraphé, un ensemble 18 constitué d'une paire de nappe d'armures croisées, une interne 20 et une externe 22, d'enroulement a pas long en sens inverse inférieur à 60°, et une gaine d'étanchéité externe polymérique 24.

Ainsi, alors que les nappes d'armure croisées 20, 22 que l'on détaillera ci-après, permettent à la conduite 10 de résister aux efforts de traction axiale dans le sens longitudinal de la conduite 10, l'ensemble structurel cylindrique, de la carcasse 12 à la voûte métallique 16, permet lui, à la conduite de résister aux efforts radiaux.

La nappe d'armure interne 20 est constituée d'une pluralité de fils d'armure 26, enroulés parallèlement en hélice à pas long autour de la voûte métallique 16. Les fils d'armures 26 ici au nombre de 32, forment un angle α inférieur à 60° avec les génératrices G de la voûte métallique 16. Une particularité de ces fils d'armure 26 dont on retrouve une illustration partielle en perspective sur la Figure 2 réside en ce que, d'une part ils sont obtenus par tréfilage et laminage de fils de forme ronds, et d'autre part en ce que leur largeur l est au moins de quatre fois leur épaisseur e, par exemple 4,25 fois.

Ainsi, à partir de fils de forme ronds tréfilés et laminés on obtient en une seule passe à un coût très avantageux des fils d'armure larges dont le rapport l/e est supérieur à quatre. En outre, grâce au tréfilage on obtient aussi des fils dont les propriétés mécaniques sont accrues notamment en termes de dureté et de résistance contrairement à un ruban métallique par exemple obtenu par refendage d'un feuillard. Ce procédé combinant les opérations de tréfilage, de traitement thermique et de laminage à froid permet l'obtention et l'utilisation de fils d'armure larges dont la contrainte à la rupture en traction est supérieure à 900 MPa, avantageusement 1100 MPa, ou de préférence 1400 MPa.

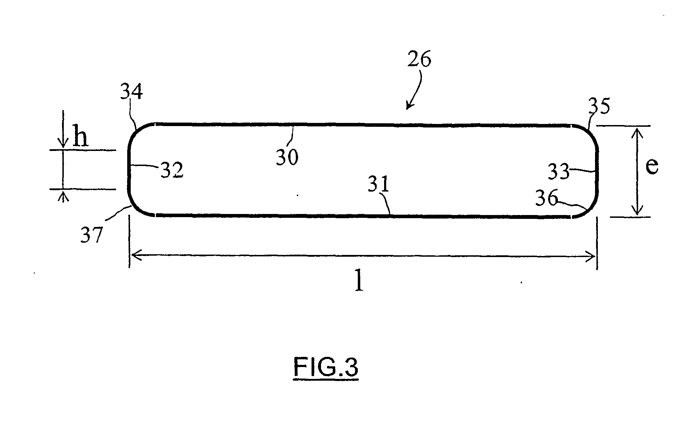

La Figure 3 présente une géométrie de fil particulièrement avantageuse. De part et d'autre des grandes faces 30, 31, les bords du fil présentent de façon symétrique des faces 32,33 sensiblement planes et perpendiculaires aux grandes faces 30,31. La présence de ces faces planes 32,33 permet d'améliorer le comportement de la nappe d'armures soumise à un effort de compression, en réduisant le risque de chevauchement des fils qui prennent appui les uns contre les autres. En effet, ces faces 32,33 servent d'appui lors des contacts entre fils adjacents. Leur orientation perpendiculaire aux forces et aux déplacements latéraux générés par la compression permet aux fils de prendre appui les uns sur les autres sans risque de chevauchement. De plus, préférentiellement, la hauteur h de ces faces 32,33 est supérieure à 30% de l'épaisseur des fils, avantageusement 40% de façon à améliorer les appuis entre fils voisins pour éviter les risques de chevauchement. En outre, la hauteur h des faces 32, 33 est avantageusement inférieure à 70% de l'épaisseur des fils, et de préférence inférieure à 60%, le restant de l'épaisseur étant occupé par les congés de raccordement 34, 35, 36, 37 avec les grandes faces 30, 31.

Ces fils sont fabriqués, en une ou plusieurs étapes, entre au moins deux paires de cylindres de laminage sensiblement perpendiculaires entre elles et successives, une première paire pour façonner les grandes faces 30, 31, et une seconde paire perpendiculaire à la première pour façonner les faces 32, 33 desdits bords du fil.

Avantageusement, la rugosité moyenne Ra des faces situées sur les bords desdits fils 32, 33, 34, 35, 36, 37, mesurée selon la norme ISO 4287, est inférieure à 1,6. De la sorte, les bords des fils présentent un bon état de surface, ce qui a pour effet d'améliorer la tenue en fatigue des nappes d'armures.

Avantageusement, les grandes faces 30,31 présentent elles aussi une rugosité moyenne Ra inférieure à 1,6. De la sorte les efforts de frottement entre couches superposées sont réduits.

Selon un autre mode de réalisation, les fils sont préalablement contrôlés en totalité avec un appareil de contrôle non destructif du type courants de Foucault (Eddy Current Testing en anglais) permettant de détecter des défauts de surface du type fissure, repliure ou paille, ledit appareil étant étalonné pour détecter les défauts de taille inacceptable pour la tenue mécanique du fil.

Selon une autre caractéristique de l'invention, les fils d'armure, vus en coupe transversale, ont dans leurs quatre coins des congés de raccordement 34, 35, 36, 37 de forme sensiblement arrondie et de rayon moyen supérieur à 0,5mm, avantageusement 1 mm.

La nappe d'armures externe 22, représentée sur la Figure 1, comporte une pluralité de fils d'armures 28 enroulés également parallèlement en hélice et a pas long autour de la nappe d'armures interne 20 dans un sens contraire en formant un angle inférieur à 60° par rapport aux génératrices. Les fils d'armure 28 de la nappe d'armures externe 22 sont, soit identiques aux fils d'armure 26 de la nappe d'armures interne 20 soit de dimensions différentes, par exemple d'un rapport l/e inférieur.

En outre, les fils d'armure 26, 28 des deux nappes d'armures 20, 22, présentent, par exemple, une épaisseur comprise entre deux et neuf millimètres et une largeur comprise entre huit et trente-six millimètre. À titre d'illustration, pour les conduites flexibles adaptées aux eaux dites profondes dont le diamètre intérieur est supérieur à neuf pouces, les fils présentent une section de 3 x 20, 5 x 20 ou de 5 x 22, en millimètres. De plus, sur ce type de conduite donné à titre d'exemple, l'utilisation d'armures présentant le rapport largeur sur épaisseur supérieur ou égale à 4 permet avantageusement de réaliser une conduite dont le nombre de fils par nappe d'armures est inférieur à 40.

Par ailleurs, il est disposé entre les nappes d'armures une couche du type aramide, par exemple sous formé de bandes de kevlar enroulées en hélice le long de la conduite.

## Revendications

1. Conduite flexible pour le transport des hydrocarbures comprenant de l'intérieur vers l'extérieur, un ensemble structurel cylindrique (12, 14, 16) adapté à résister aux efforts radiaux et au moins une première nappe d'armures (20) adaptée à résister aux efforts de traction axiale, ledit ensemble structurel cylindrique comprenant un enroulement métallique en hélice à pas court et une gaine d'étanchéité interne polymérique (14), ladite première nappe d'armures comportant une pluralité de fils d'armure (26), lesdits fils d'armure étant constitués de fils métalliques formés et aplatis, lesdits fils d'armure qui présentent une largeur l supérieure à une épaisseur e étant enroulés parallèlement en hélice à pas long autour dudit ensemble structurel (12, 14, 16), lesdits fils (26) formant un angle inférieur à 60° avec les génératrices (G) dudit ensemble structurel ;
**caractérisée en ce que** lesdits fils d'armure (26) présentent un rapport, largeur sur épaisseur l/e, supérieur ou égal à quatre, tandis que, vus en section droite, lesdits fils (26) présentent sur leurs deux bords des faces d'appui (32, 33) sensiblement planes et perpendiculaires à leurs grandes faces (30, 31) ;
et **en ce que** la hauteur h des faces d'appui (32, 33) est comprise entre 30% et 70% de l'épaisseur e desdits fils.

2. Conduite flexible selon la revendication 1, **caractérisée en ce que** la hauteur h desdites faces d'appui (32, 33) est supérieure à 40% de l'épaisseur e desdits fils (26).

3. Conduite flexible selon la revendication 1 ou 2, **caractérisée en ce que** la hauteur h des faces d'appui (32, 33) est inférieure à 60% de l'épaisseur desdits fils (26).

4. Conduite flexible selon l'une quelconque des revendications 1 à 3, **caractérisée en ce que** lesdits fils (26) présentent une contrainte à la rupture en traction supérieure à 900 MPa.

5. Conduite flexible selon l'une quelconque des revendications 1 à 4, **caractérisée en ce que** la rugosité moyenne Ra des faces (32, 33, 34, 35, 36, 37) situées sur les bords desdits fils (26), présente une valeur inférieure à 1,6.

6. Conduite flexible selon l'une des revendications 1 à 5, **caractérisée en ce que** lesdits fils (26), vus en section droite, ont dans leurs quatre coins des congés de raccordement (34, 35, 36, 37) de forme sensiblement arrondie et de rayon moyen supérieur à 0,5 mm.

7. Conduite flexible selon l'une quelconque des revendications 1 à 6, **caractérisée en ce que** ladite nappe d'armures (20) comprend moins de quarante fils d'armure (26).

8. Conduite flexible selon l'une quelconque des revendications 1 à 7, **caractérisée en ce qu'**elle comprend une seconde nappe d'armures (22), les fils d'armure (28) de ladite seconde nappe d'armures étant enroulés en hélice inverse à pas long autour de ladite première nappe d'armure (20), et **en ce que** le rapport de la largeur sur l'épaisseur des fils d'armure (28) de ladite seconde nappe (22) est inférieur audit rapport largeur sur épaisseur des fils (26) de ladite première nappe (20).

## Claims

1. A flexible pipe for transporting hydrocarbons, comprising, from the inside outward, a cylindrical structural assembly (12, 14, 16) designed to withstand the radial forces and at least a first armor ply (20) designed to withstand the axial tensile forces, said cylindrical structural assembly including a short-pitch helical metal winding and a polymeric internal sealing sheath (14), said first armor ply comprising a plurality of armor wires (26), said armor wires consisting of flattened shaped metal wires, said armor wires, which have a width 1 greater than a thickness e, being wound parallel in a long-pitch helix about said structural assembly (12, 14, 16), said wires (26) making an angle of less than 60° with the generatrices (G) of said structural assembly;
**characterized in that** said armor wires (26) have a width/thickness ratio l/e equal to or greater than 4, whereas, said wires (26), seen in cross section, have, on their two flanks, bearing faces (32, 33)that are substantially plane and perpendicular to their large faces (30, 31),
and **in that** the height h of the bearing faces (32, 33) is between 30% and 70% of the thickness e of said wires.

2. The flexible pipe as claimed in claim 1, **characterized in that** the height h of the bearing faces (32, 33) is greater than 40% of the thickness e of said wires (26).

3. The flexible pipe as claimed in either claim 1 or 2, **characterized in that** the height h of the bearing faces (32, 33) is less than 60% of the thickness of said wires (26).

4. The flexible pipe as claimed in one of claims 1 to 3, **characterized in that** said wires (26) have an ultimate tensile strength of greater than 900 MPa.

5. The flexible pipe as claimed in one of claims 1 to 4, **characterized in that** the average roughness Ra of the faces (32, 33, 34, 35, 36, 37) located on the edges of said wires (26) has a value of less than 1.6.

6. The flexible pipe as claimed in one of claims 1 to 5, **characterized in that** said wires (26), seen in cross section, have in their four corners joining fillets (34, 35, 36, 37) of substantially rounded shape with an average radius of greater than 0.5 mm.

7. The flexible pipe as claimed in any one of claims 1 to 6, **characterized in that** said armor ply (20) comprises fewer than forty armor wires.

8. The flexible pipe as claimed in any one of claims 1 to 7, **characterized in that** it includes a second armor ply (22), the armor wires (28) of said second armor ply being wound in a reverse long-pitch helix about said first armor ply (20), and **in that** the ratio of the width to the thickness of the armor wires (28) of said second ply (22) is smaller than said width/thickness ratio of the wires (26) of said first ply (20).

## Patentansprüche

1. Flexible Rohrleitung für den Transport von Kohlenwasserstoffen, die, von innen nach außen, Folgendes umfasst: eine zylindrische strukturelle Anordnung (12, 14, 16), die dafür angepasst ist, den radialen Kräften zu widerstehen, und mindestens eine erste Schicht aus Zugbewehrungen (20), die dafür vorgesehen ist, den axialen Zugkräften zu widerstehen, wobei die zylindrische strukturelle Anordnung eine metallische spiralförmige Wicklung mit kleiner Steigung und einen inneren polymerischen Dichtungsmantel (14) umfasst, wobei die erste Schicht aus Zugbewehrungen eine Vielzahl von Bewehrungsstreifen (26) aufweist, wobei die Bewehrungsstreifen durch geformte und abgeplattete Metallstreifen gebildet sind, wobei die Bewehrungsstreifen, die eine Breite l aufweisen, die größer als eine Dicke e ist, spiralförmig mit großer Steigung parallel um die strukturelle Anordnung (12, 14, 16) herum gewickelt sind, wobei die Streifen (26) mit den Mantellinien (G) der strukturellen Anordnung einen Winkel von weniger als 60° bilden;
**dadurch gekennzeichnet, dass** die Bewehrungsstreifen (26) ein Verhältnis, von Breite zu Dicke, von l:e aufweisen, das größer oder gleich vier ist, während, im Querschnitt gesehen, die Streifen (26) an ihren zwei Rändern Abstützflächen (32, 33) aufweisen, die im Wesentlichen eben und zu ihren Breitseiten (30, 31) senkrecht sind; und dass die Höhe h der Abstützflächen (32, 33) zwischen 30% und 70% der Dicke e der Streifen beträgt.

2. Flexible Rohrleitung nach Anspruch 1, **dadurch gekennzeichnet, dass** die Höhe h der Abstützflächen (32, 33) größer als 40% der Dicke e der Streifen (26) ist.

3. Flexible Rohrleitung nach Anspruch 1 oder 2, **dadurch gekennzeichnet, dass** die Höhe h der Abstützflächen (32, 33) kleiner als 60% der Dicke e der Streifen (26) ist.

4. Flexible Rohrleitung nach einem der Ansprüche 1 bis 3, **dadurch gekennzeichnet, dass** die Streifen (26) eine Zugreißfestigkeit von mehr als 900 MPa aufweisen.

5. Flexible Rohrleitung nach einem der Ansprüche 1 bis 4, **dadurch gekennzeichnet, dass** die mittlere Rauigkeit Ra der Flächen (32, 33, 34, 35, 36, 37), die sich an den Rändern der Streifen (26) befinden, einen Wert von kleiner als 1,6 aufweist.

6. Flexible Rohrleitung nach einem der Ansprüche 1 bis 5, **dadurch gekennzeichnet, dass** die Streifen (26), im Querschnitt gesehen, in ihren vier Ecken Anschlusskehlen (34, 35, 36, 37) mit im Wesentlichen abgerundeter Form und einem mittleren Radius von mehr als 0,5 mm haben.

7. Flexible Rohrleitung nach einem der Ansprüche 1 bis 6, **dadurch gekennzeichnet, dass** die Schicht aus Zugbewehrungen (29) mindestens vierzig Bewehrungsstreifen (26) umfasst.

8. Flexible Rohrleitung nach einem der Ansprüche 1 bis 7, **dadurch gekennzeichnet, dass** sie eine zweite Schicht aus Zugbewehrungen (22) umfasst, wobei die Bewehrungsstreifen (28) der zweiten Schicht aus Zugbewehrungen umgekehrt spiralförmig mit großer Steigung um die erste Schicht aus Zugbewehrungen (20) herum gewickelt sind, und dass das Verhältnis der Breite zur Dicke der Bewehrungsstreifen (28) der zweiten Schicht aus Zugbewehrungen (22) kleiner als das Verhältnis der Breite zur Dicke der Streifen (26) der ersten Schicht (20) ist.
